# EUROPÄISCHE PATENTANMELDUNG

(11) **EP 1 079 491 A2**
(43) Veröffentlichungstag der Anmeldung: **28.02.2001**
(21) Anmeldenummer: 00115843.5
(22) Anmeldetag: 24.07.2000
(51) Int. Cl.: H02G 5/06

(54) **Gehäuse für eine Verteilerstation**

(30) Priorität: 18.08.1999 CH 150999
(71) Anmelder: Reichle & De-Massari AG, 8622 Wetzikon (CH)
(72) Erfinder: Reichle, Hans, 8620 Wetzikon (CH)
(74) Vertreter: Ritscher, Thomas, Dr.

(57) **Zusammenfassung**

Das Gehäuse (13) ist für die Installation von mobilen Verteileranlagen bestimmt und besitzt mindestens ein wenigstens frontseitig zugängliches Patchfeld (24) und/oder mindestens einen wenigstens frontseitig zugänglichen Baugruppenträger für Aktiv- oder Passivgeräte; ferner besitzt das Gehäuse (13) mindestens einen seitlich zugänglichen Kabelkanal (23).

## Beschreibung

Die vorliegende Erfindung betrifft ein Gehäuse für die Installation von mobilen Verteileranlagen, insbesondere bei SOHO-Netzwerken und ein aufsetzbares Gehäusemodul dafür.

Verteileranlagen finden ihre Verwendung in der Telekommunikations- und EDV-Technologie, insbesondere bei sogenannten LAN-(Local Area Network) Anwendungen. Vermehrt verwenden Industriebetriebe eigene Netzwerke (LAN) für den internen Datenaustausch und die interne Kommunikation in Wort und Bild. Dabei kommen gleichermassen Funkübertragung, Kupferleitungen, Koaxialkabel, Lichtwellenleiter oder Hybridsysteme zur Anwendung. Diese Netzwerke werden benutzerspezifisch ausgelegt, d.h. werden der jeweiligen Orts- oder Betriebsstruktur und den individuellen Bedürfnissen der Teilnehmer angepasst. Insbesondere erfordern diese Netzwerke eine Vielzahl von aktiven oder passiven Geräten und Vorrichtungen, wie bspw. Server, Modems, Hubs, Switches oder Router und dazugehörige Haupt- und Nebenverteiler. Die Verkabelung, Installation und der Unterhalt derartiger Netzwerke ist äusserst komplex und erfordert gut ausgebildetes und fachkundiges Personal.

Im Bereich dieser komplexen LAN-Anordnungen werden heute vermehrt sogenannte SOHO-(Small-Office-Home-Office) Netzwerke installiert. Diese Kleinbüro-, Heimbüro- oder KMU-Netzwerke umfassen je nach Anwender bis zu 48 Endgeräte, im KMU-Bereich, oder 5 bis 7 Endgeräte im Kleinbüro oder Heimbüro. Hier typischerweise etwa 1 bis 3 Computer und Telefone, 1 oder 2 Drucker und 1 Faxgerät. Die Installation dieser Netzwerke innerhalb des Gebäudes wird in der Regel von Installateuren, Systemintegratoren oder den Anwendern selbst vorgenommen.

Für den Anschluss grösserer Netzwerke müssen jedoch weiterhin Fachkräfte hinzugezogen werden. Dabei werden Gebäude- oder Stockwerk-Verteiler montiert und den individuellen Bedürfnissen entsprechend ausgerüstet und angeschlossen. Diese Verteilerstationen weisen in der Regel ein metallisches Gestell mit Montageschienen, an welchen die erforderlichen Baugruppenträger, Rangierfelder, Rangierhilfen, Adaptergehäuse, Einschübe, Zubehör etc. befestigt werden. Derartige Gestelle werden direkt am Gebäude befestigt und sind oft in dafür vorgesehenen Wandschränken fest untergebracht.

Auch bei den oben genannten Klein-Netzwerken ist es heute noch erforderlich, die entsprechenden Installationsarbeiten von einem geschulten Elektroinstallateur vornehmen zu lassen. Dies erweist sich für den Privat- und Kleinbürobetrieb jedoch als aufwendig, insbesondere weil diese Betriebe im allgemeinen eine hohe Mobilität aufweisen, d.h. öfter dislozieren und/oder ihre Klein-Netzwerke uminstallieren, ausbauen oder verändern. Festinstallierte Verteilerstationen sind für Benutzer von Klein-Netzwerken unkomfortabel, hinderlich und unerwünscht.

Es werden in diesem Zusammenhang vermehrt Aktivgeräte für die Vernetzung von Telekommunikations- und/oder Datenverarbeitungsgeräten angeboten, die vom Benutzer selbst installiert und angeschlossen werden können. Bei der Selbstinstallation und Verkabelung dieser Aktivgeräte und Endgeräte durch die privaten Benutzer werden keine besonderen Massnahmen für die sichere Kabelführung getroffen und liegen die Kabel in der Regel lose nebeneinander und oft wirr durcheinander. Dadurch erhöht sich die Störanfälligkeit dieser Klein-Netzwerke einerseits (z.B. Kontakt- oder Kabeldefekte durch Unachtsamkeiten beim Begehen oder bei Reinigungsarbeiten) und wird andererseits eine unästhetische Arbeitsumgebung erzeugt, die darüber hinaus auch eine Unfallgefährdung (z.B. durch Stolpern) mit sich bringt. Das Vernetzen der einzelnen Geräte und der Unterhalt eines Klein-Netzwerks erfordert vom Benutzer Sachkenntnis, viel Improvisationsvermögen, ist unübersichtlich, unästhetisch und zeitraubend.

Es ist deshalb Aufgabe der vorliegenden Erfindung ein Gehäuse für eine mobile und individuell ausbaufähige SOHO-Verteilerstation zu schaffen, welches vom Benutzer selbständig und ohne fachmännische Hilfe bestückt und verkabelt werden kann. Dieses Gehäuse soll für eine Verteilerstation mit breitbandigen Netzzugängen geeignet sein, d.h. unterschiedliche Daten- und Stromkabel sowie eine interne Stromversorgung aufnehmen können. Insbesondere soll das Gehäuse unterschiedliche Aktivgeräte aufnehmen können und über ein hinreichend grosses Patchfeld für ein bequemes Verbinden oder Rangieren der Anschlüsse verfügen. Die Verkabelung und Kabelführung sollte sicher und in einfacher Weise vorgenommen werden können. Darüber hinaus ist es Ziel der vorliegenden Erfindung die oben genanten technischen Aufgaben unter Verwendung eines ästhetisch ansprechenden und in einfacher Weise erweiterbaren Gehäuses zu erreichen.

Erfindungsgemäss wird diese Aufgabe durch ein Gehäuse für die Installation einer mobilen Verteileranlage, insbesondere für ein SOHO-Netzwerk, mit den Merkmalen des Anspruchs 1 gelöst und insbesondere durch ein mobiles Grundgehäuse, mit mindestens einem trontseitig zugänglichen Patchfeld und/oder mindestens einem frontseitig zugänglichen Baugruppenträger für Aktiv- oder Passivgeräte. Erfindungsgemäss weist dieses Gehäuse einen seitlich zugänglichen Kabelkanal auf. Das frontseitig zugängliche Patchfeld ist mit passiven Steckverbindungen versehen. Die frontseitig zugänglichen Baugruppenträger sind u.a. für die Montage von aktiven Geräten vorgesehen.

Erfindungsgemäss weist dieses Grundgehäuse mindestens einen seitlich angeordneten Kabelkanal auf, der über eine schlitzförmige Öffnung in einer Seitenwand von aussen zugänglich ist. Dieser Kabelkanal erlaubt es, Kabel von der Frontseite des Gehäuses zur Rückseite des Gehäuses zu führen und umgekehrt. Dazu können die einzelnen Kabel von der Aussenseite des Gehäuses in den seitlich geschlitzten Kabelkanal eingelegt werden.

Bevorzugte Weiterbildungen des erfindungsgemässen Gehäuses weisen die Merkmale der Unteransprüche auf.

Insbesondere kann das Gehäuse Bauteile aus Stahlblech und/oder aus Kunststoff aufweisen. Ein für die vorgesehene Verwendung besonders geeignetes Gehäuse zeichnet sich dadurch aus, dass dieses eine Breite von mindestens 300 mm, vorzugsweise 312 mm, eine Höhe von mindestens 300 mm und eine Tiefe von mindestens 300 mm aufweist. Ein derart dimensioniertes Gehäuse genügt, um ein geeignetes Patchfeld aufzunehmen und die Verbindungen sicherzustellen. Ein Gehäuse, welches geeignet ist, Baugruppenträger für Aktivgeräte aufzunehmen, weist eine Höhe von weniger als 860 mm, vorzugsweise von 685 mm auf. Dies erlaubt es, dieses Gehäuse unter einen Arbeitstisch stellen zu können.

In einer bevorzugten Ausführungsform der Erfindung weist das Gehäuse einen Sockelteil und ein front- und rückseitig zugängliches Aufsatzelement auf, welches mindestens ein Patchfeld und/oder mindestens einen Baugruppenträger sowie mindestens ein seitliches Abstützelement umfasst. Dieses Abstützelement ist derart ausgebildet, dass mit dessen Hilfe der seitlich zugängliche Kabelkanal gebildet wird. Dieses Grundgehäuse ist also im wesentlichen aus zwei Gehäuseteilen aufgebaut, einem Sockelteil und einem Aufsatzelement, in welchem das Patchfeld oder der Baugruppenträger montiert ist.

In einer anderen möglichen Ausführungsform weist das Gehäuse ein metallisches Chassis auf, an welchem das mindestens eine Patchfeld und/oder der mindestens eine Baugruppenträger sowie die Seiten- und Stellflächen befestigt sind. Diese Seiten- und Stellflächen können in Form von Abdeckplatten am Chassis befestigt sein und sind vorzugsweise aus Kunststoff gefertigt.

Bei allen Ausführungsformen ist erfindungsgemäss ein Kabelkanal vorgesehen, der von aussen zugänglich ist, so dass Kabel von der Frontseite zur Rückseite in einfacher Weise von aussen in diesen Kanal eingelegt werden können, ohne diese umständlich durch das Gehäuse hindurch ziehen zu müssen.

Bevorzugte Ausführungsformen weisen Mittel zur Zugentlastung von Kabeln auf und/oder Aussparungen in den Stellflächen für die Kabeldurchführung. Es kann auch ein Bodenloch vorgesehen sein. Ebenso können Aussparungen vorgesehen sein, um das Gehäuse am Boden zu befestigen.

Es versteht sich, dass dieses Gehäuse ästhetisch ansprechend gestaltet ist, insbesondere mit einer transparenten und/oder getönten Frontabdeckung sowie einer einsteckbaren, einschnappbaren und/oder schwenkbaren Rückwand ausgestattet ist, welche vorzugsweise mit Lüftungsschlitzen versehen ist.

Es ist wesentlich für die Modularität des erfindungsgemässen Gehäuses, dass dieses Mittel für die Befestigung eines aufsetzbaren Gehäusemoduls aufweist. Diese Mittel wirken mit entsprechenden Befestigungsmitteln am Gehäusemodul in geeigneter Weise zusammen.

Die Vorteile des erfindungsgemässen Gehäuses sind dem Fachmann unmittelbar ersichtlich und insbesondere in seiner Eignung für SOHO-Netzwerke zu sehen. Dieses Gehäuse lässt sich ohne fachmännische Hilfe und unter Einhaltung aller gebotenen Sicherheitsaspekte vom Benutzer selbst bestücken und verkabeln. Die modulare Bauweise erlaubt eine Erweiterung der Netzwerkfunktionen ohne Nachteile für das Gesamtkonzept. Die Frontplatte mit ihrem Patchfeld ist bedienerfreundlich angeordnet und macht die in der Regel rückseitig angeordneten Steckanschlüsse der Aktivgeräte in komfortabler Weise zugänglich. Dies erleichtert dem Benutzer den Unterhalt der Verteilerstation seines Netzwerks und das Auffinden von Fehler- oder Störstellen. Lose oder unordentlich herumliegende Kabel können in ästhetisch befriedigender Weise verstaut werden und können deshalb auch nicht mehr beschädigt werden. Die Gefahr über lose herumliegende Kabel zu stolpern wird mit dem vorliegenden Gehäuse erheblich reduziert oder ganz vermieden. Als besonderer Vorteil des erfindungsgemässen Gehäuses erweist sich jedoch dessen Mobilität, welche es erlaubt, eine individuell installierte Verteiler-Station ohne Kostenverlust an einen anderen Standort zu dislozieren. Die Modulbauweise dieses Gehäuses gestattet es, den individuellen Bedürfnissen der Benutzer, beim Aufbau ihrer Verteilerstation, in flexibler und angemessener Weise nachzukommen.

Im Folgenden soll die Erfindung anhand der Figuren beispielhaft erläutert werden. Dabei zeigen:
- Fig. 1:: fest montierte Verteilerstation bekannter Art;
- Fig. 2:: räumliche Darstellung eines erfindungsgemässen mobilen Gehäuses für eine Verteileranordnung;
- Fig. 3:: Explosionsdarstellung des erfindungsgemässen Gehäuses gemäss Fig. 2;
- Fig. 4:: räumliche Darstellung gemäss Fig. 2, ohne Patchfeld;
- Fig.5a-e:: räumliche Darstellungen alternativer Gestaltungen der erfindungsgemässen Kabelkanäle;
- Fig. 6:: räumliche Darstellung eines erfindungsgemässen mobilen Gehäuses mit Aktiv- und Passivkomponenten;
- Fig. 7:: Explosionsdarstellung des erfindungsgemässen Gehäuses gemäss Fig. 6;
- Fig. 8:: räumliche Darstellung gemäss Fig. 6, ohne montierte Baugruppen;
- Fig. 9:: Explosionsdarstellung einer alternativen Gehäusekonstruktion;
- Fig.10: Detaildarstellung von Elementen für die Zugentlastung der einzelnen Kabel;

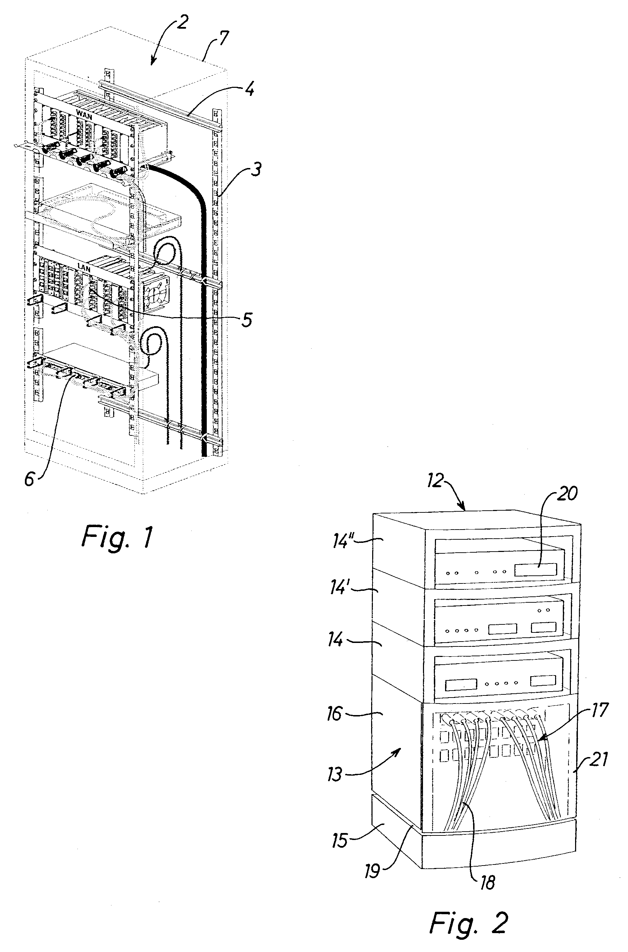

Figur 1 zeigt eine fest montierte Verteilerstation 2 bekannter Art. Diese Verteilerstationen 2 umfassen metallische Träger 3, die fest am Mauerwerk eines Gebäudes fixiert sind und mit Profilschienen 4 versehen sind, an welche die einzelnen Ranchierfelder 5 oder Verteilerschnittstellen 6 angebracht sind. Derartige Verteilerstationen werden in der Regel in einem speziellen Wandschrank 7 untergebracht. Derartige Verteilerstationen 2 sind kostspielig und eignen sich nicht besonders für SOHO-Netzwerke, da für deren Installation fachmännisch geschultes Personal erforderlich ist. Eine Platzierung einer derartigen Verteilerstation 2 im Arbeitsbereich eines Kleinbetriebes kommt nicht nur aus sicherheitstechnischen Gründen sondern auch aus ästhetischen Gründen nicht in Frage.

Figur 2 zeigt eine bevorzugte Gestaltung einer erfindungsgemässen mobilen Verteilerstation 12. Diese besteht im wesentlichen aus einem Grundgehäuse 13 und weist im dargestellten Beispiel drei aufsetzbare Gehäusemodule 14, 14' und 14'' auf. Das Grundgehäuse 13 umfasst einen Sockelteil 15 und ein Aufsatzelement 16. Dieses Aufsatzelement 16 trägt ein Patchfeld 17. Die im montierten Zustand angeschlossenen Kabel 18 werden durch eine an einer Seitenfläche angebrachten schlitzförmigen Öffnung 19 in einen Kabelkanal eingelegt und rückseitig durch ein Zugentlastungselement 61 und aus dem Gehäuse geführt. Die Aktivgeräte 20 werden mit der Rückseite des Patchfeldes 17 verbunden. Das in Figur 2 dargestellte Gehäuse weist frontseitig eine transparente Frontabdeckung 21 auf, welche an Scharnieren angelenkt ist, aber auch in einfacher Weise einrastbar gestaltet sein kann.

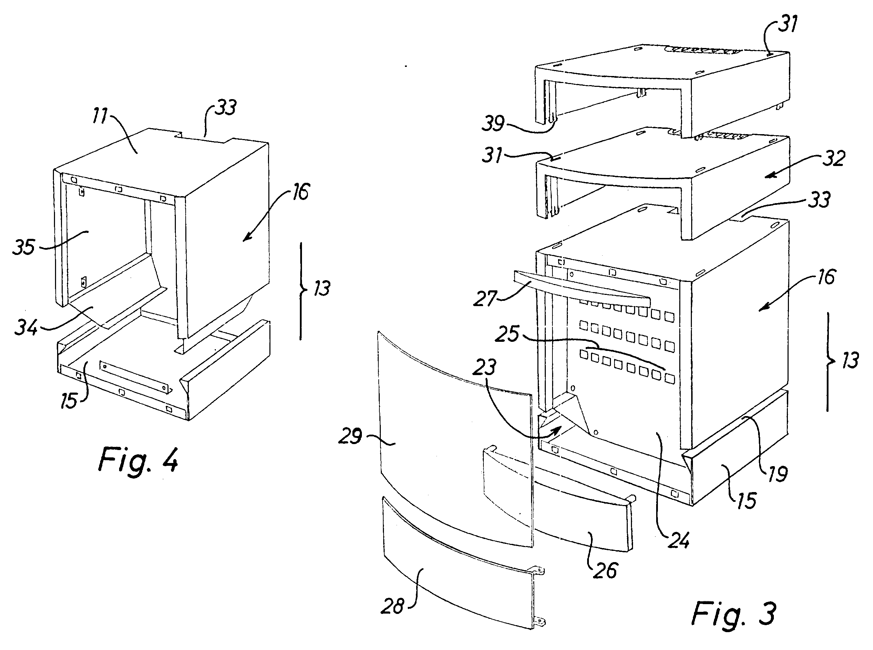

Figur 3 zeigt das erfindungsgemässe Gehäuse 13 für eine Verteilerstation in der Ausgestaltung gemäss Figur 2, jedoch in Explosionsdarstellung. Diese Darstellungsweise lässt die erfinderischen Komponenten deutlich erkennen. Das erfindungsgemässe Grundgehäuse 13 umfasst bei dieser Ausführungsform einen Sockelteil 15, an welchem ein Aufsatzelement 16 befestigt ist. Zwischen diesem Sockelteil 15 und dem Aufsatzelement 16 ist ein Schlitz 19 ausgebildet, der in einen Kabelkanal 23 mündet. Das Aufsatzelement 16 trägt darüber hinaus ein Patchfeld 24, an welchem eine Vielzahl passiver Verbindungselemente 25 angebracht sind. An diesem Grundgehäuse 13 sind Blenden 26 und 27 befestigt, welche gemeinsam mit Verkleidungsteilen 28 resp. einer Frontabdeckung 29 ein ansprechendes Äusseres bilden. Dieses Grundgehäuse 13 weist darüber hinaus Öffnungen 31 auf, mit deren Hilfe ergänzende Gehäusemodule 32 auf dem Grundgehäuse 13 aufgesetzt und befestigt werden können. Rückseitig angebrachte Aussparungen 33 erlauben es, die verwendeten Kabel in geordneter Weise von den Aktivgeräten zu den Verbindungselementen 25 zu führen.

Figur 4 zeigt das Grundgehäuse 13 ohne Patchfeld 24. Dadurch kann eine besondere Ausführungsform für die Bildung eines seitlich zugänglichen Kabelkanals 23 deutlich gemacht werden. Dieser Kabelkanal 23 bildet sich beim vorliegenden Ausführungsbeispiel durch ein seitliches Abstützelement 34. Dieses Abstützelement 34 ist an einer Seitenwand 35 des Aufsatzelementes 16 befestigt und nach Innen abgewinkelt. Im montierten Zustand liegt das Abstützelement 34 auf dem Sockelteil 15 auf und bildet zusammen mit diesem den erfindungsgemässen Kabelkanal 23. Bei dieser Ausführungsform weist das Sockelteil 15 eine Breite und eine Tiefe von ca. 30 cm auf und weist das gesamte Grundgehäuse 13 eine Höhe von ca. 30 cm auf. Im vorliegenden Beispiel wird die Verbindung mit einem Gehäusemodul mit Hilfe von Rastnasen 39 sichergestellt, welche in die Schlitze 31 eingebracht werden können. Dadurch kann die Deckfläche 11 des Aufsatzelementes 16, ohne ästhetische Beeinträchtigung, als Stellfläche für ein zusätzliches Aktivgerät verwendet werden. Die rückseitige Aussparung 33 in der Deckfläche des Aufsatzelementes 16 erlaubt die nötigen Verbindungskabel von diesem zusätzlichen Aktivgerät an das Patchfeld zu führen. Bei einer bevorzugten Ausführungsform ist diese Aussparung 33 mit einem Kabelkamm versehen. In diesen Kabelkamm (nicht dargestellt) können die einzelnen Kabel eingelegt werden, derart, dass diese in übersichtlicher Weise angeordnet sind und von unerwünschten Zugkräften entlastet werden.

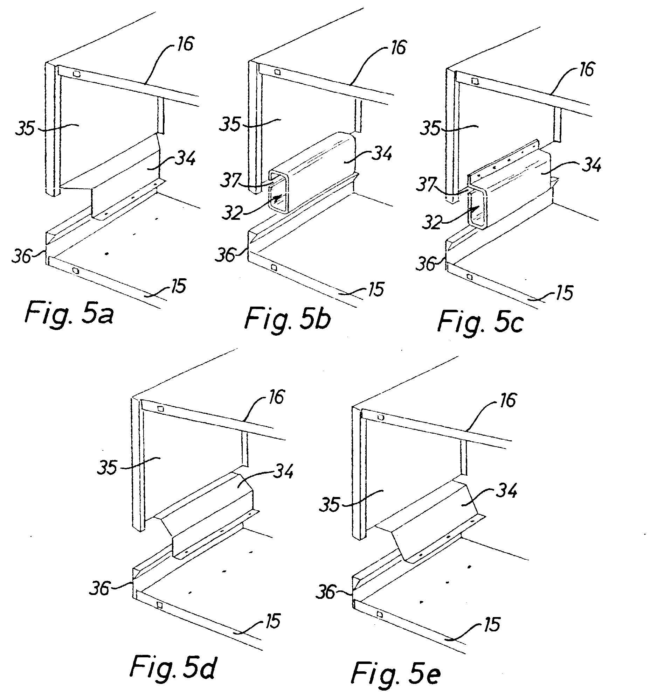

Weitere mögliche Ausführungsformen für die Ausbildung eines erfindungsgemässen seitlich zugänglichen Kabelkanals 23 sind in den Figuren 5a - 5e dargestellt. In einer einfachen Ausführungsform gemäss Fig. 5a, 5d, 5e wird der Kabelkanal 23 durch ein in geeigneter Weise gewinkeltes Abstützelement 34 gebildet. Die besondere Gestaltung des gewinkelten Abstützelementes 34 wird der Fachmann vom gewünschten Kabelkanalvolumen und der gewünschten Gehäusestabilität abhängig machen. Dieses Abstützelement 34 trägt das Aufsatzelement 16 und kann beispielsweise an den Sockelteil 15 angenietet, angeschraubt, angeklebt, angeschweisst und insbesondere punktverschweisst sein. Der Kabelkanal 23 bildet sich durch dieses Abstützelement 34 und den Sockelteil 15 sowie einem zu diesem Sockelteil 15 gehörenden Seitenteil 36. Das Abstützelement 34 ist derart dimensioniert, dass sich im montierten Zustand zwischen dem Seitenteil 36 und der Seitenwand 35 des Aufsatzelementes 16 ein durchlaufender Spalt bildet. Über diesem Spalt können die zu verlegenden Kabel von der Frontseite des Patchfeldes zur Rückseite des Gehäuses geführt werden.

Figur 5b zeigt eine weitere mögliche Ausgestaltung des Stützelementes 34. Dabei ist das Stützelement 34 als geschlitztes Hohlprofil ausgeformt und mit dem Aufsatzelement 16 fest verbunden. Im montierten Zustand ist dieses geschlitzte Hohlprofil 34 mit dem Sockelteil 15 fest verbunden. Das Hohlprofil 34 ist derart dimensioniert, dass sich im montierten Zustand zwischen der Seitenfläche 35 des Aufsatzelementes 16 und dem Seitenteil 36 des Sockelteils 15 ein Spalt ausbildet, durch welchen die Verbindungskabel von aussen in den Kabelkanal 23 eingelegt werden können.

Eine weitere mögliche Ausformung des Abstützelementes 34 ist aus Fig. 5c ersichtlich. Auch bei dieser Ausführungsform stützt sich das Aufsatzelement 16 mit Hilfe des Abstützelementes 34 auf dem Sockelteil 15 ab und weist eine seitlich zugängliche Öffnung 37 auf. Wiederum ist das Abstützelement 34 derart dimensioniert, dass sich zwischen der Seitenwand 35 des Aufsatzelementes 16 und dem Seitenteil 36 des Sockelteils 15 ein Schlitz bildet.

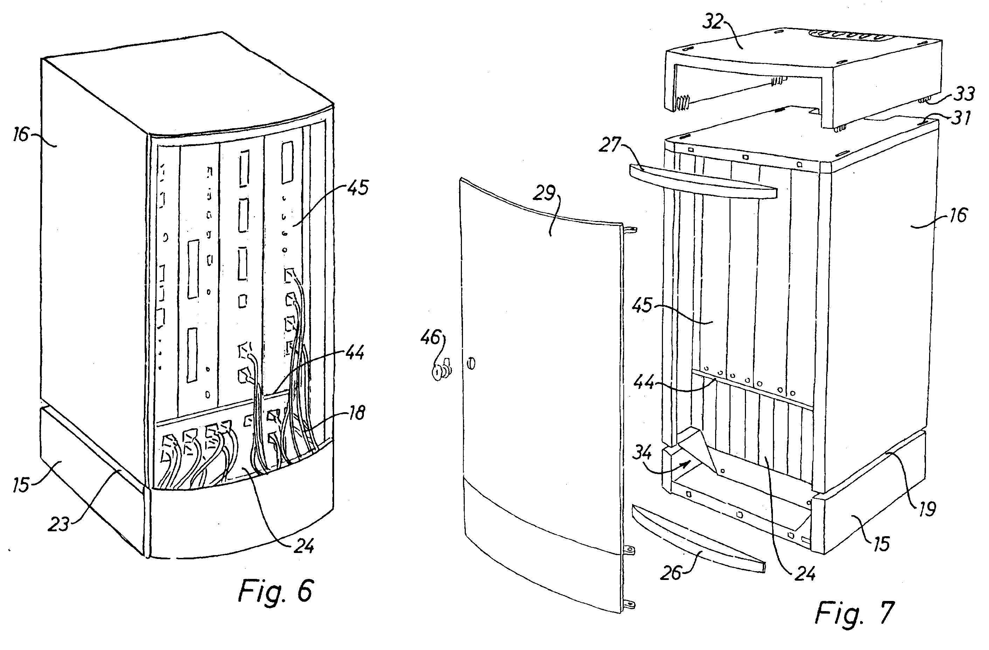

Figur 6 zeigt eine weitere Ausführungsform des erfindungsgemässen Gehäuses, welches es erlaubt, zusätzlich zu einem Patchfeld 24 Baugruppenträger 44 für Aktiv- oder Passivgeräte 45 aufzunehmen. Auch bei dieser Ausführungsform weist das erfindungsgemässe Gehäuse einen seitlich zugänglichen Kabelkanal 23 auf. Aus dieser Figur ist ersichtlich, wie die frontseitig angeschlossenen Kabel 18 durch den seitlich zugänglichen Kabelkanal 23 zur Rückseite des Gehäuses geführt werden. Bei dieser Ausführungsform wird in analoger Weise zur Ausführungsform gemäss Figur 2 ein Sockelteil 15 und ein Aufsatzelement 16 verwendet, um den gewünschten seitlich zugänglichen Kabelkanal 23 realisieren zu können. Auch bei dieser Ausführungsform lassen sich zusätzliche Gehäusemodule aufsetzen, um weitere Aktiv- oder Passivgeräte aufnehmen zu können. Eine bevorzugte Ausführungsform weist eine Tiefe von 500 mm, eine Höhe von weniger als 860 mm, vorzugsweise 685 mm, und eine Breite von mindestens 300 mm auf. Es versteht sich, dass auch dieses Gehäuse rückseitig mit einer geeigneten Zugentlastung für Kabel und mit geeigneten Aussparungen für die Kabeldurchführung versehen sein kann.

Figur 7 zeigt die erfindungsgemässe Ausführungsform gemäss Figur 6 in Explosionsdarstellung. Daraus ist deutlich ersichtlich, dass auch dieses Gehäuse aus einem Sockelteil 15 und einem Aufsatzelement 16 aufgebaut ist. Das Aufsatzelement 16 weist Abstützelemente 34 auf, welche derart dimensioniert und gestaltet sind, dass sich zwischen dem Aufsatzelement 16 und dem Sockelteil 15 ein Spalt 19 bildet und gleichzeitig ein Kabelkanal 23 begrenzt wird. Durch diesen Spalt 19 können die frontseitig angeschlossenen Kabel von aussen in den seitlich offenen Kabelkanal eingelegt werden. Das Aufsatzelement 16 ist erfindungsgemäss mit einem Baugruppenträger 44 versehen, in welchem mehrere Aktivgeräte 45 befestigt sind. Darüber hinaus kann ein Patchfeld 24 in diesem Aufsatzelement 16 angeordnet sein. Bei der vorliegenden Ausführungsform sind für die ästhetische Gestaltung Blenden 26, 27 aufgesteckt und eine Frontabdeckung 29 angebracht. In einer Weiterbildung dieser Frontabdeckung 29 kann eine Vorrichtung 46 zur Verriegelung dieser Frontabdeckung vorgesehen sein. Vorzugsweise ist diese Frontabdeckung transparent und/oder getönt, um einen besonderen ästhetischen Effekt zu erzielen. Es versteht sich, dass auch dieses Gehäuse mit zusätzlichen Gehäusemodulen 32 ergänzt werden kann. Dazu weist sowohl das Aufsatzelement 16 als auch das Gehäusemodul 32 in geeigneter Weise ausgebildete Mittel zur gegenseitigen Befestigung auf, insbesondere Rastnasen 39, welche in entsprechend dimensionierte Rastöffnungen 31 eingreifen können.

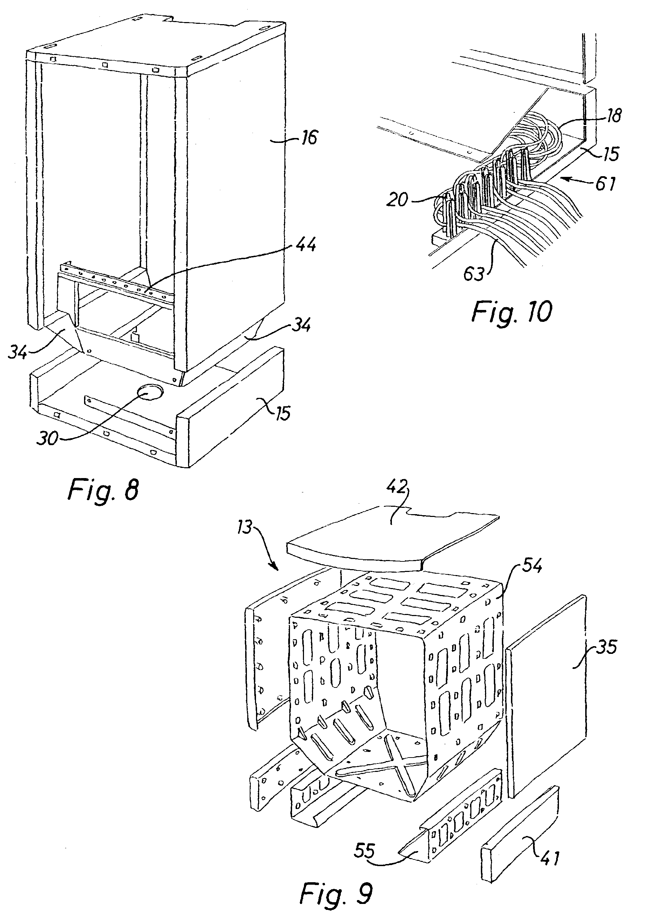

Figur 8 zeigt das Gehäuse gemäss Figur 6, jedoch ohne montierte Baugruppen. Aus dieser Figur ist der mit dem Aufsatzelement 16 verbundene Baugruppenträger 44 ersichtlich. Die Abstützelemente 34 sind bei dieser Ausführungsform frontseitig miteinander verbunden. Durch die Montage des Aufsatzelementes 16 mit dem Sockelteil 15 bildet sich zwischen den Abstützelementen 34 und dem seitlichen Kantenbereich des Sockelteils 15 der erfindungsgemässe Kabelkanal 23. Das Sockelteil 15 ist in diesem Ausführungsbeispiel mit einem Bodenloch 30 versehen. Dies erlaubt die rückseitig angeordneten Kabel direkt mit im Boden angeordneten Steckdosen zu verbinden. Damit kann vermieden werden, dass lose Kabel auf dem Boden liegen.

Der in Figur 9 dargestellte Aufbau eines erfindungsgemässen Gehäuses umfasst ein metallisches Chassis 54, welches auf geeigneten Trägerschienen 55 steht und mit geeigneten Kunststoffelementen 35, 41, 42 abgedeckt ist. Die Verwendung eines metallischen Chassis und deren besondere Ausgestaltung zur Bildung von seitlich zugänglichen Kabelkanälen liegt im Bereich des gewöhnlichen technischen Handelns des Fachmanns. Auf die besondere Konstruktionsweise soll hier deshalb nicht weiter eingegangen werden. Wesentlich für die Erfindung sind dabei lediglich die seitlich zugänglichen Kabelkanäle. Auch bei dieser Bauweise sind geeignete Träger, insbesondere ein Patchfeld 24 und/oder ein Baugruppenträger 44 vorgesehen, um die erforderlichen Aktiv- und Passivgeräte aufnehmen zu können.

Figur 10 zeigt eine im rückseitigen Bereich des Sockelteils 15 angeordnete Gruppe von Zapfen 20, um welche die einzelnen Kabel 18 herumgeführt werden können. Durch das Verlegen der Kabel in dieser Zapfengruppe wird verhindert, dass bei einer allfälligen Zugbelastung der Kabel diese Zugkräfte direkt auf die Steckerverbindungen wirken. Es versteht sich, dass der Fachmann die Gestaltung und Dimensionierung dieser Zapfengruppe der jeweiligen Kabelart anpasst, insbesondere sollten optische Kabel keinen zu starken Krümmungen ausgesetzt werden. Eine weitere Massnahme für die Zugentlastung dieser empfindlichen Kabel kann mit Hilfe von kammartig ausgebildeten Zungen, welche in den Ausnehmungen 33 angeordnet sind, erreicht werden. Dabei werden die einzelnen Kabel in den Zwischenräumen dieser kammartig angeordneten Zungen reibschlüssig gehalten. Weiterbildungen und andere Konstruktionsweisen des erfindungsgemässen Gehäuses liegen im Bereich des gewöhnlichen fachmännischen Handelns. So versteht es sich, dass die äussere Erscheinungsform und der innere Aufbau in beliebiger Weise gestaltet werden kann. Insbesondere soll der innere Aufbau rückseitig genügend Raum für allfällige Stromversorgungen oder Transformatoren aufweisen.

## Patentansprüche

1. Gehäuse (13) für die Installation von mobilen Verteileranlagen, mit mindestens einem wenigstens frontseitig zugänglichen Patchfeld (24) und/oder mindestens einem wenigstens frontseitig zugänglichen Baugruppenträger für Aktiv- oder Passivgeräte, sowie mit mindestens einem seitlich zugänglichen Kabelkanal (23).

2. Gehäuse nach Anspruch 1, dadurch gekennzeichnet, dass dieses Bauteile (15, 34, 35, 36) aus Stahlblech und/oder aus Kunststoff aufweist.

3. Gehäuse nach einem der Ansprüche 1 oder 2, dadurch gekennzeichnet, dass das Gehäuse ein Sockelteil (15) und ein front- und rückseitig zugängliches Aufsatzelement (16) umfasst, welches Aufsatzelement (16) das mindestens eine Patchfeld (24) und/oder den mindestens einen Baugruppenträger (44) aufweist, sowie mindestens ein seitliches Abstützelement (34) aufweist, welches derart ausgebildet ist, dass mit dessen Hilfe der seitlich zugängliche Kabelkanal (23) gebildet wird.

4. Gehäuse nach einem der Ansprüche 1 oder 2, dadurch gekennzeichnet, dass das Gehäuse (16) ein Chassis (54), vorzugsweise ein metallisches Chassis, aufweist, an welchem das Patchfeld (24) und/oder der Baugruppenträger (44), sowie die Seiten- (35) und Stellflächen (11) befestigt sind.

5. Gehäuse nach einem der Ansprüche 1 bis 4, dadurch gekennzeichnet, dass Mittel (61) zur Zugentlastung von Kabeln (63) vorgesehen sind.

6. Gehäuse nach einem der Ansprüche 1 bis 5, dadurch gekennzeichnet, dass dieses mindestens eine Stellfläche (11) aufweist, welche mit mindestens einer Aussparung (30, 33) für die Kabelführung versehen ist.

7. Gehäuse nach einem der Ansprüche 1 bis 6, dadurch gekennzeichnet, dass dieses mindestens eine transparente und/oder getönte Frontabdeckung (29) aufweist.

8. Gehäuse nach einem der Ansprüche 1 bis 7, dadurch gekennzeichnet, dass dieses eine abnehmbare, einschnappbare oder schwenkbare Rückwand und vorzugsweise Entlüftungsschlitze aufweist.

9. Gehäuse nach einem der Ansprüche 1 bis 8, dadurch gekennzeichnet, dass dieses Mittel (31) zur Befestigung eines aufsetzbaren Gehäusemoduls (32) aufweist.

10. Gehäusemodul (32) zum Aufsetzen auf ein Gehäuse (13) gemäss Anspruch 1, dadurch gekennzeichnet, dass dieses Mittel (39) zur Befestigung an diesem Gehäuse (13) aufweist.
